# EUROPEAN PATENT APPLICATION

(11) **EP 2 000 245 A2**
(43) Date of publication of application: **10.12.2008**
(21) Application number: 07737943.6
(22) Date of filing: 07.03.2007
(51) Int. Cl.: B23K 9/00, B23K 9/235, B23K 11/16, B23K 11/31, B23K 20/12, B23K 20/14

(54) **WELDING METHOD**

(30) Priority: 09.03.2006 JP 2006064151
(71) Applicant: Taiyo Nippon Sanso Corporation, Shinagawa-ku Tokyo 142-8558 (JP); Osaka University, Suita-shi Osaka 565-0871 (JP); TOKYU CAR CORPORATION, Yokohama-shi Kanagawa 236-0043 (JP)
(72) Inventor: SATO, Toyoyuki, Tokyo 142-8558 (JP); OCHIAI, Toshimitu, Tokyo 142-8558 (JP); FUJII, Hidetoshi, Suita-shi, Osaka 565-0871 (JP); ISHIKAWA, Takeshi, Yokohama-shi, Kanagawa 236-0043 (JP)
(74) Representative: Waldren, Robin Michael
(86) International application number: PCT/JP2007/054429
(87) International publication number: WO 2007/102540

(57) **Abstract**

A joining method of the present invention includes conducting friction-stir-welding of members to be joined, to form a joint; and then conducting melt-welding or resistance-welding of the joint, wherein the friction-stir-welding of members to be joined is conducted while flowing an inert shielding gas, or the melt-welding or resistance-welding of the joint is conducted while applying an ultrasonic wave.

## Description

### TECHNICAL FIELD

The present invention relates to a joining method using friction-stir-welding, and specifically to a joining method which reduces the generation of blowholes when members to be joined, which are formed of aluminium and the like, are friction-stir-welded to form a joint to which another member to be joined is further melt-welded to the joint, or when welding defects of the joint is melt-welded to be repaired.
Priority is claimed on Japanese Patent Application No. 2006-64151, filed March 9, 2006, the content of which is incorporated herein by reference.

### BACKGROUND ART

As described in Japanese Unexamined Patent Application, First Publication No. 2000-301363 for example, a friction-stir-welding is the following joining technique. First, a cylindrical rotator (tool) having a protrusion (probe) on the tip is rotated and imposed on the contact surfaces of base materials with strong power. Then, the generated heat is used to soften the base materials, the probe is penetrated thereinto, and the periphery of the joint is plasticized and mixed up, to thereby unify the base materials.

A base material that can be joined by friction-stir-welding is generally a metal having a relatively low softening temperature. As far as an aluminium alloy is concerned, examples thereof include a non-heat-treated aluminium alloy including 1000 series and 5000 series (JIS standard); a heat-treated aluminium alloy that is a material to be hardly joined, including 2000 series, 6000 series, and 7000 series (JIS standard); and a wrought aluminium alloy including ADC12 (JIS standard). Since aluminium has a large coefficient of linear expansion, a distortion occurs due to welding, and a deformation is large. However, unnecessary heat is not applied during friction-stir-welding, so it has an advantageous property of small distortion.

In addition to aluminium, examples of a base material that can be joined include a magnesium alloy including AZ31 and AZ61 (JIS standard), titanium and an alloy thereof, copper and an alloy thereof, nickel and an alloy thereof, soft steel, lead, a steel material, and a plastic material. In this way, the improvements have been appropriately performed in friction-stir-welding regarding the range of an adaptable base material, a probe shape, and a probe material, etc.

Since joining can be achieved while preventing the generation of distortion, friction-stir-welding is used for a car of a train and a body of an airplane for the purpose of reduction in weight.
However, a tool needs to be imposed along the joint surfaces of base materials in friction-stir-welding. Therefore, friction-stir-welding is used for a linear joint, and is inappropriate to a complicated shape. Moreover, concave portions remain at start and end points of a joint due to the shape of a probe of a tool. Therefore, the start and end points need to be provided outside a product, and friction-stir-welding is inappropriate to fine joining. In addition, a tool is imposed on base materials at a load within a range from about 200 kg to 5,000 kg, and so the base materials need to be rigidly fixed. Therefore, friction-stir-welding is effectively used at an early stage of a joining step, for example in the case where plate materials are joined along a longitudinal direction.

By the way, in the production of a body of a car, various other members including a bracket and a handle need to be joined to the joint formed by friction-stir-welding in a step following the friction-stir-welding step. Since friction-stir-welding cannot be used for this joining, welding such as TIG welding is conducted instead.
In addition, when there are defects in the part subjected to friction-stir-welded, they are repaired by using TIG welding.

However, blowholes are generated when melt-welding such as TIG welding is conducted at the joint formed by friction-stir-welding in the case where other members are appropriately joined to the joint formed by friction-stir-welding or where the part subjected to friction-stir-welding is repaired, and there is the problem that the strength of this part weakens.

The present inventors have researched and found the following information. When friction-stir-welding is conducted, a stirring part such as a probe mixes up components within atmosphere such as moisture into a melted metal, and mixed up oxide films formed on a route surface and a shoulder contact surface. Therefore, hydrates and oxides are generated, and the problem that the strength weakens occurs.
[Patent Document 1] Japanese Unexamined Patent Application, First Publication No. 2000-301363

### DISCLOSURE OF INVENTION

An object of the present invention is to reduce the generation of blowholes at the joint which is formed by friction-stir-welding and then is subjected to melt-welding or resistance-welding.

In order to solve the aforementioned problem,
the present invention provides a joining method including conducting friction-stir-welding of members to be joined while flowing an inert shielding gas, to form a joint; and then conducting melt-welding or resistance-welding of the joint.

The present invention provides a joining method including conducting friction-stir-welding of members to be joined while flowing an inert shielding gas, to form a joint; and then conducting melt-welding or resistance-welding of the joint.

The present invention provides a joining method including conducting friction-stir-welding of members to be joined while flowing an inert shielding gas, to form a joint; and then conducting melt-welding or resistance-welding of the joint while applying an ultrasonic wave.

In the present invention, the frequency of the ultrasonic wave is preferably within a range from 1 to 30 kHz.

In the present invention, the melt-welding or the resistance-welding is preferably conducted to join another member to be joined to the joint.

In the present invention, the member to be joined is preferably at least one selected from the group consisting of aluminum, an aluminum alloy, magnesium, a magnesium alloy, nickel, a nickel alloy, titanium, a titanium alloy, copper, a copper alloy, lead, and a steel material.

According to the present invention, an inert gas is used to shield a joint during friction-stir-welding, and therefore, components within an atmosphere such as moisture are not mixed up into a melted metal. Moreover, since a melted metal is not oxidized, oxide films are also not mixed up into the melted metal. For these reasons, the causes of blowholes are not generated, and therefore, the joint having few blowholes can be obtained even by conducting subsequent resistance-welding or melt-welding such as TIG welding. In addition, the reduction in the strength of the joint can be prevented.

Moreover, because an ultrasonic wave is applied during melt-welding such as TIG welding, cavitation can be forcibly generated by ultrasonic wave vibration in the early stage of welding, and gas can be expelled from the melted part. Therefore, it is possible to previously eliminate the causes of generating blowholes that are generated right before the solidification of the melted metal by the difference of solubilities in normal melt-welding. Also, the finally remaining blowholes can be reduced to thereby obtain the joint having few blowholes, and the original strength of the joint can be obtained.

### BRIEF DESCRIPTION OF THE DRAWINGS

FIG. 1 is a schematic diagram illustrating an example of a friction-stir-welding apparatus used in the present invention.
FIG. 2 is a perspective view illustrating an example of the joining configuration of another member to be joined in the present invention.
FIG. 3 is a schematic diagram illustrating an example of a TIG welding apparatus used in the present invention.
FIG. 4 is an explanatory diagram illustrating the mechanism of the removal of blowholes by applying an ultrasonic wave in the present invention.
FIG. 5 is the photograph of the cross-sectional surface of the joint, which shows the results of the experiment 1.
FIG. 6 is the photograph of the cross-sectional surface of the joint, which shows the results of the experiment 2.
FIG. 7 is the photograph of the cross-sectional surface of the joint, which shows the results of the experiment 3.
FIG. 8 is the photograph of the cross-sectional surface of the joint, which shows the results of the experiment 4.
FIG. 9 is the photograph of the cross-sectional surface of the joint, which shows the results of the experiment 5.
FIG. 10 is the graph showing the relationships among the frequency of a ultrasonic wave, the generated quantity of a blowhole, and the gas cavity diameter of a blowhole.

The reference symbols shown in these figures are defined as follows:
1 represents a rotator; 2 represents a probe; 3 represents a cover; 4 represents a shielding gas pipe; A and B represent a member to be joined; C represents a joint; and D represents another member to be joined.

### BEST MODE FOR CARRYING OUT THE INVENTION

### (Embodiment 1)

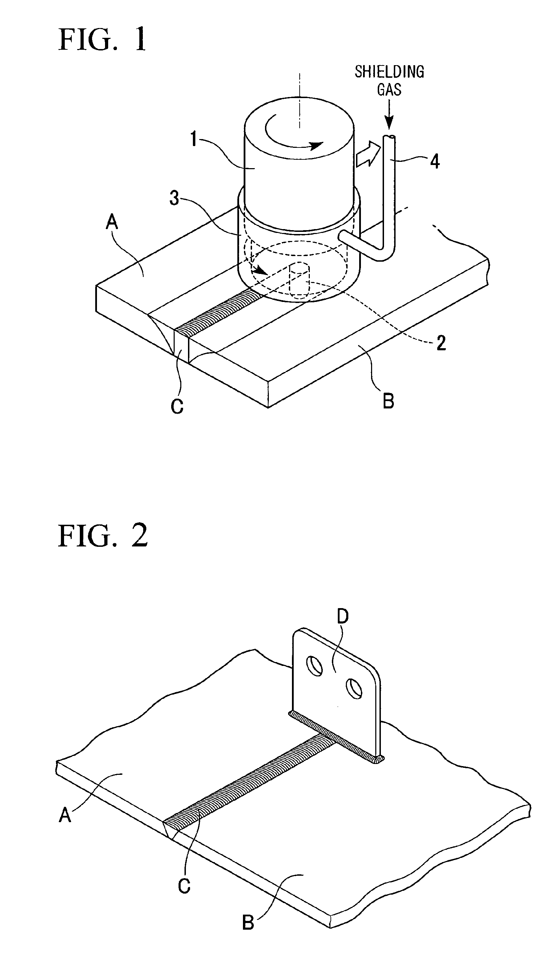

FIG. 1 illustrates an example of the apparatus used for friction-stir-welding in the present invention.
This example of the apparatus is schematically comprised of a cylindrical rotator 1 called a tool; a cylindrical probe 2 with a small diameter, which is a protrusion provided on the central part of the bottom surface of the rotator 1; a cover 3 that covers the lower part of the rotator 1, and a shielding gas pipe 4 where a shielding gas is flowed into the space inside the cover 3.
Moreover, a pressurization-rotation-driving section, which is not illustrated, is provided at the upper part of the rotator 1. Accordingly, the overall rotator 1 can be pushed down below while rotating the rotator 1.
The reference symbols A and B represent a member to be joined in the form of a plate. These members to be joined A and B are fixed in the condition where their end surfaces are firmly attached to each other, and the firmly attached end surfaces form the contact part.
In addition, the aforementioned probe 2 is rotated and pressurized to thereby stir the contact surfaces of the contact part by friction, resulting in the joining of the members to be joined A and B. In this case, the shoulder of the rotator 1, on which the probe 2 is provided, contacts the stirred part of the contact part.

In order to join the members to be joined A and B using the apparatus to thereby form the joint C, the probe 2 is positioned above the aforementioned contact part, and is pressed into the contact part while pressurizing and rotating the rotator 1 under the above condition. At the same time, an inert shielding gas is flowed through the shielding gas pipe 4 into the space inside the cover 3, to thereby prepare an inert gas atmosphere. Then, the rotator 1 is rotated, and is also gradually moved along the contact part. In this way, the joint C is formed, in which the members to be joined A and B are joined.

Examples of the base material of the members to be joined A and B includes, as described above, a non-heat-treated aluminium alloy including 1000 series and 5000 series; a heat-treated aluminium alloy that is a material to be hardly joined, including 2000 series, 6000 series, and 7000 series; a wrought aluminium alloy including ADC12; a magnesium alloy including AZ31 and AZ61; titanium and an alloy thereof; copper and an alloy thereof; nickel and an alloy thereof; a steel material; and lead. The members to be joined A and B may be made of the same type of a base material or the different types of base materials.

The rotational frequency of the rotator 1 is within a range from 200 to 3,000 rpm, and the load is about within a range from 500 to 5,000 kg. Examples of the shielding gas include an inert gas such as argon or helium; and the mixed gas of the inert gas, nitrogen, and dried air, etc. The quantity of the shielding gas is not particularly limited, but an inert gas atmosphere having an oxygen content of 0.1 vol% or less should be prepared in the space around the lower part of the rotator 1.
In addition, the movement speed of the rotator 1 is about within a range from 0.5 to 220 cm/min.

Subsequently, another member to be joined D as shown in FIG. 2 is joined to the joint C formed in the above manner.
FIG. 2 illustrates the example in which a bracket of another member to be joined D is set up on the joint C so as to cross the joint C, and is joined to the members to be joined A and B and the joint C using melt-welding.

The shape of another member to be joined D is not particularly limited. The joining configuration is not limited to the above example in which another member to be joined D is welded simultaneously with the members to be joined A and B and the joint C, and other joining configurations can be used as long as a part or the whole of another member to be joined D is welded with the joint C.

In this embodiment, the following melt-welding can be directly used for the welding of another member to be joined D: gas shield welding such as normal TIG welding or MIG (Metal Inert Gas) welding, electron beam welding, laser welding, and the combination thereof. Moreover, resistance-welding such as spot welding or seam welding can be used.
Examples of the material of another member to be joined D include aluminium or an alloy thereof; magnesium or an alloy thereof; titanium and an alloy thereof; copper and an alloy thereof; nickel and an alloy thereof; a steel material; and lead.

In Embodiment 1, the friction-stir-welding of the members to be joined A and B is conducted while flowing an inert shielding gas, to form a joint; and then the melt-welding is conducted to join another member to be joined D to the joint C. Thus, moisture within air is not mixed up into a melted metal during the friction-stir-welding. Moreover, since a melted metal is not oxidized, oxide films are also not mixed up into the melted metal. For these reasons, the causes of blowholes are not generated, and therefore, the joint C having few blowholes can be obtained even by conducting subsequent melt-welding such as TIG welding. In addition, the reduction in the strength of the joint C can be prevented.

In the above description, the embodiment, in which melt-welding is conducted to join another member to be joined D to the joint C, is explained, but the present invention is not limited to this embodiment. In the embodiment where welding defects are repaired using TIG welding, etc. when the joint C has welding defects, the same operations can be performed to reduce the generation of blowholes.

### (Embodiment 2)

In the friction-stir-welding of Embodiment 2, the formation of the joint C is conducted in air without flowing an inert shielding gas. As an apparatus for friction-stir-welding, the apparatus shown in FIG. 1 can be directly used, and the shielding gas pipe 4 may be regulated so as not to flow the shielding gas.
Then, for the welding of another member to be joined D in the subsequent step, the method is used, which conducts, while applying an ultrasonic wave, melt-welding including gas shield welding such as TIG welding or MIG welding, electron beam welding, laser welding, and melt-welding.

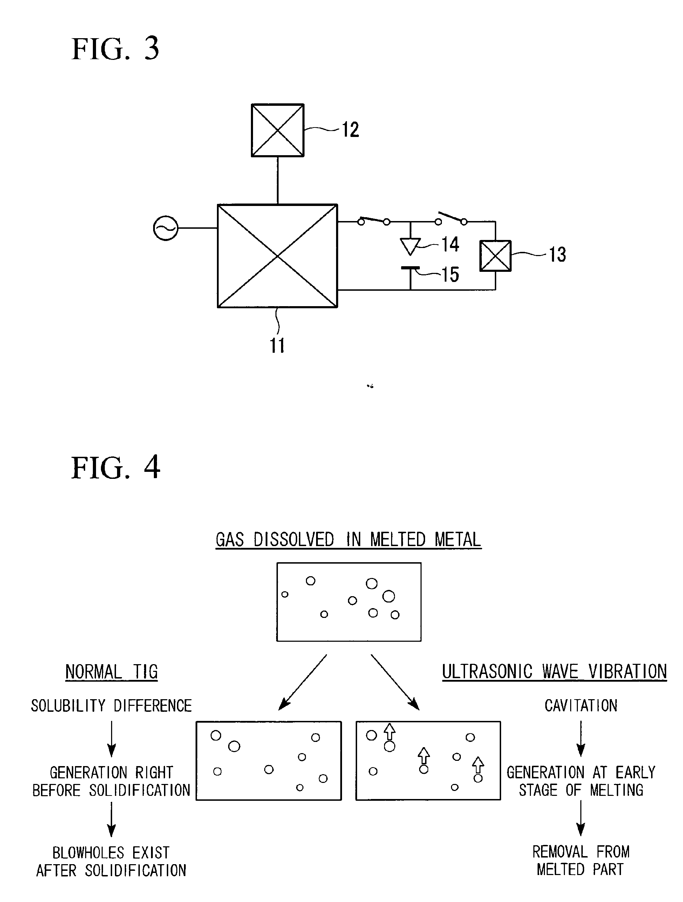

FIG. 3 illustrates an example of a welding apparatus for conducting TIG welding while applying an ultrasonic wave to a welded part. This welding appratus includes an AC (Alternating Current) power section 11, a waveform control section 12 for conducting pulse width modulation (PWM), and a DC (Direct Current) power section 13. The AC power section 11 is comprised of a rectifier that rectifies commercial alternating current, an inverter comprised of high-speed IGBT (Insulated Gate Bipolar Transistor) that converts the direct current obtained by the rectifier into alternating current, and a high-frequency transformer. The alternating current of 50 Hz or 60 Hz from the inverter of the AC power section 11 is modulated with the high frequency wave of 1 kHz to 30 kHz from the waveform control section 12, to thereby prepare the high-frequency current, which is applied to an electrode 14 of a welding torch. Herein, the reference symbol 15 represents the aforementioned joint C (i.e. the members to be joined A and B). In addition, the direct current from the DC power section 13 is applied to the electrode 14 only at the arc start in the beginning of the welding.

In this welding apparatus, the high-frequency wave having a welding current waveform of 1 kHz to 30 kHz is output, and the on-off action of welding arc is performed at a superimposed frequency within a range from 1 kHz to 30 kHz. For this reason, it is speculated that the arc repeats the contraction and expansion and the ultrasonic wave of 1 kHz to 30 kHz is applied to a molten pool. However, the precise mechanism is currently unknown.

In the TIG welding using the welding apparatus, the direct current from the DC power section 13 is applied to the electrode 14 at the arc start. When the members to be welded A and B are made of an aluminium material or magnesium material, the oxide film formed on the surface thereof is removed. Then, the welding is conducted by switching the applied current from the direct current to the high-frequency current. The welding conditions are the same as those of normal TIG welding. The welding may be conducted by using an inert gas such as an argon gas as the shielding gas, a tungsten electrode, and a welding current within a range from 50 to 640 A. However, a molten pool tends to be sufficiently formed even though the welding current is low to a certain degree.
The frequency of the ultrasonic wave is within a range from 1 kHz to 30 kHz, and preferably from 15 kHz to 25 kHz. When the ultrasonic wave having the frequency within the range from 1 kHz to 30 kHz is applied, it was confirmed that the generation of blowholes at the joint C is reduced as shown in following Examples.
Herein, the welding apparatus shown in FIG. 3 is an alternating current type. When the members to be joined A and B are made of a steel material, the pulse width modulation of the direct current from the TIG welding machine using a DC power source is performed to prepare the direct current in which high-frequency waves are superimposed. By using this direct current, the intensity of the arc can be modulated so as to generate the ultrasonic wave.

In Embodiment 2, because an ultrasonic wave is applied during melt-welding such as TIG welding, as shown in FIG. 4, cavitation can be forcibly generated by ultrasonic wave vibration in the early stage of welding, and gas can be expelled from the melted part. Therefore, it is possible to previously eliminate the causes of generating blowholes that are generated right before the solidification of the melted metal by the difference of solubilities in normal melt-welding. Also, the finally remaining blowholes can be reduced to thereby obtain the joint C having few blowholes, and the original strength of the joint C can be obtained.

Even in the above description, the embodiment in which melt-welding is conducted to join another member to be joined D to the joint C is explained, but the present invention is not limited to this embodiment. In the embodiment where welding defects are repaired using TIG welding, etc. when there are welding defects in the joint C, the same operation of applying an ultrasonic wave can be performed to reduce the generation of blowholes.
Other than the method of applying an ultrasonic wave using the apparatus shown in FIG. 3, the method can be used, in which an ultrasonic wave is directly applied by making an ultrasonic transducer contact the welded part, and the same effects can be obtained.

### (Embodiment 3)

In Embodiment 3, friction-stir-welding is conducted while flowing the shielding gas of aforementioned Embodiment 1, to form the joint C; and then melt-welding such as TIG welding is conducted while applying an ultrasonic wave of Embodiment 2, to join another member to be joined D to the joint C or to repair the defects of the joint C.
Therefore, the operation procedures, and the technical functions and effects are the same as those described in Embodiments 1 and 2, and the detailed description is abbreviated herein.

### EXAMPLES

Hereinafter, the detailed examples of the present invention are described.
The friction-stir-welding was conducted under the following conditions to form the joint C, at which the TIG welding was subsequently conducted. Then, the confirmation of the blowholes generated at the joint C was performed.
In this experiment, because of the hydrates and oxides generated by the friction-stir-welding, the generated blowholes have the opportunity to drop out of the melted metal during the TIG welding. Therefore, the friction-stir-welding was firstly conducted downwardly, and then, the TIG welding was conducted sideways. As a result, the blowholes generated by the friction-stir-welding went up in a single direction, and the effects of the present invention were able to be confirmed.

### Sample: aluminium material: A5083 (JIS standard) (100 mm × 50 mm × 5 mm)

### «Conditions of friction-stir-welding»

Rotational frequency: 600 rpm
Movement speed: 100 mm/min
Shielding gas: argon gas / none
Flow rate of shielding gas: 50 L/min
Joining configuration: downward configuration

### «Conditions of TIG welding»

Current
   Normal TIG: 100 A
   Ultrasonic wave TIG: about 75 A (which is the condition for obtaining the same molten pool width as that of normal TIG)
Frequency
   Normal TIG: 60 Hz
   Ultrasonic wave TIG: 20 kHz
Arc length: 3 mm
Shielding gas: argon gas
Flow rate of shielding gas: 10 L/min
Joining configuration: sideways configuration
Welding rate: 180 mm/min

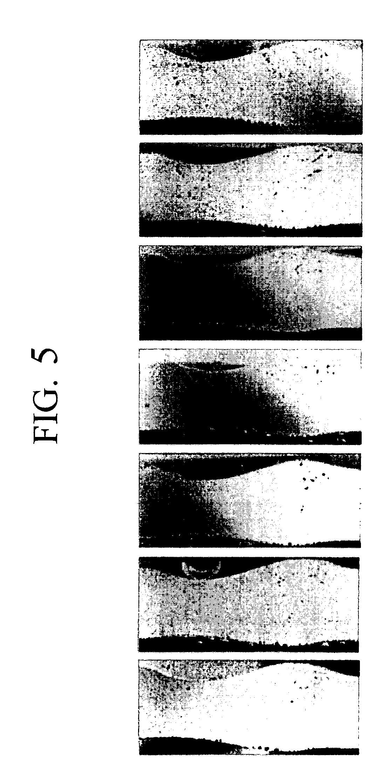

In this experiment, to the joint C formed by the friction-stir-welding, another member to be joined D was not joined by welding, but the TIG welding was conducted without any member to be joined. In other words, the weld bead was formed (dragged) on the joint C, and this joint was used as the object for the evaluation because the observation of the welded part after the experiment was easy.
Moreover, the evaluation was performed using the method where the joint C subjected to the TIG welding was sliced into thin sections in the direction perpendicular to the welding direction; these thin sections were filmed; and then the generation of the blowholes in the obtained images was observed. Herein, the seven photographs shown in each of FIG. 5 to FIG. 9 relate to the thin sections obtained by slicing at different positions.

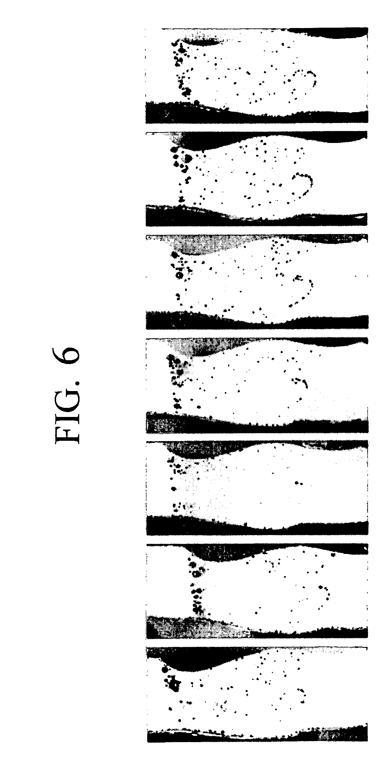

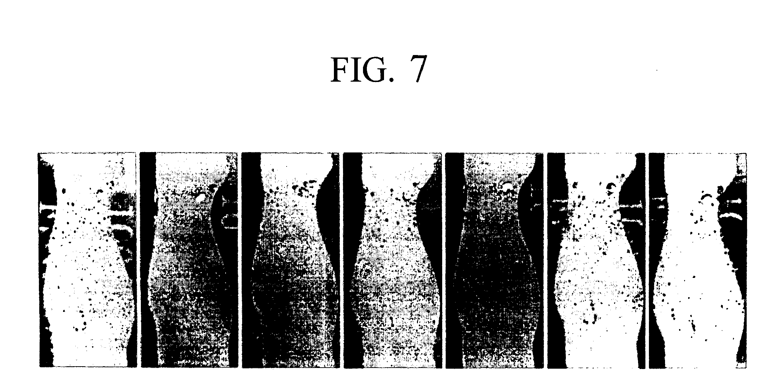

The experiment 1 was performed for comparison, in which the conventional TIG welding was used. The results were shown in FIG. 5.
In the experiment 2, the conventional method was used, in which the shielding gas was not flowed during the friction-stir-welding, and then the normal TIG welding conducted. The results were shown in FIG. 6.
In the experiment 3, the present invention was used, in which the argon gas was flowed as the shielding gas during the friction-stir-welding, and then the normal TIG welding conducted. The results were shown in FIG. 7.

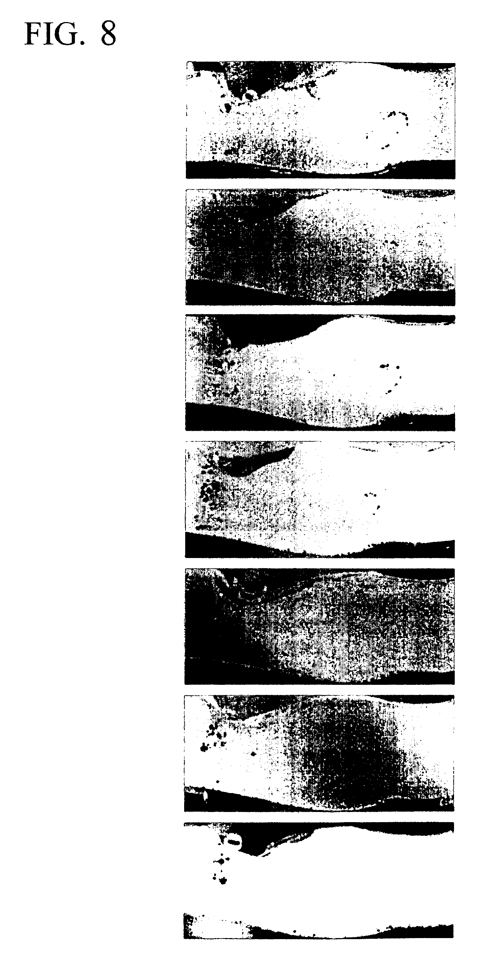

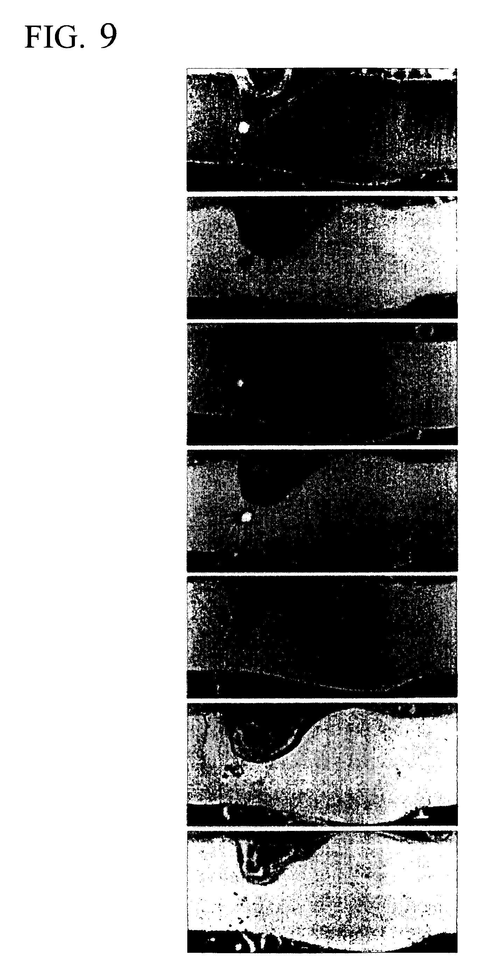

In the experiment 4, another type of the present invention was used, in which the shielding gas was not flowed during the friction-stir-welding, and then the TIG welding conducted while applying the ultra sonic wave. The results were shown in FIG 8.
In the experiment 5, another type of the present invention was used, in which the argon gas was flowed as the shielding gas during the friction-stir-welding, and then the TIG welding conducted while applying the ultra sonic wave. The results were shown in FIG. 9.

The black dots in these photograph images represent the blowholes.
It was found from FIG. 5 that the black dots hardly appeared by the normal TIG welding and the blowholes did not exist.
FIG. 6 is the photograph of the experiment 2. It was speculated that the contaminated impurities such as oxides and hydrates during the friction-stir-welding existed almost uniformly. It was also found that the blowholes were generated by the following sideways TIG welding, assembled at the upside of the melted metal, and were put together so as to form the enlarged one.
FIG. 7 is the cross-sectional photograph of the experiment 3. It was found from this photograph that the blowholes existed, but the size and quantity thereof were smaller than those in FIG. 6. Accordingly, the effects of the flow of the shielding gas during the friction-stir-welding were exerted. These results show that the shielding gas reduced the causes of generating blowholes, and thus, totally reduced the blowholes (cause-reduction-effect).

FIG. 8 is the cross-sectional photograph of the experiment 4. The followings were found from this photograph. The blowholes existed but not scattered, and the quantity thereof was smaller than that in FIG. 7. The blowholes disappeared particularly in the middle and lower parts of the melted metal section. Accordingly, the effects of the ultrasonic wave TIG welding were confirmed. These results show that the ultrasonic wave capitation accelerated the removal of the generated early air bubbles from the molten pool (removal-acceleration-effect).
FIG. 9 is the cross-sectional photograph of the experiment 5. The followings were found from this photograph. A little bit of the blowholes existed, but the quantity thereof was much smaller than that in FIG. 8. Accordingly, the combination of the flow of the shielding gas during the friction-stir-welding and the ultrasonic wave TIG welding produced the significant effects. This was because of the combination of the two different effects of the cause-reduction-effect of the blowholes and the removal-acceleration-effect of the generated blowholes, and the significant effects were able to be obtained.

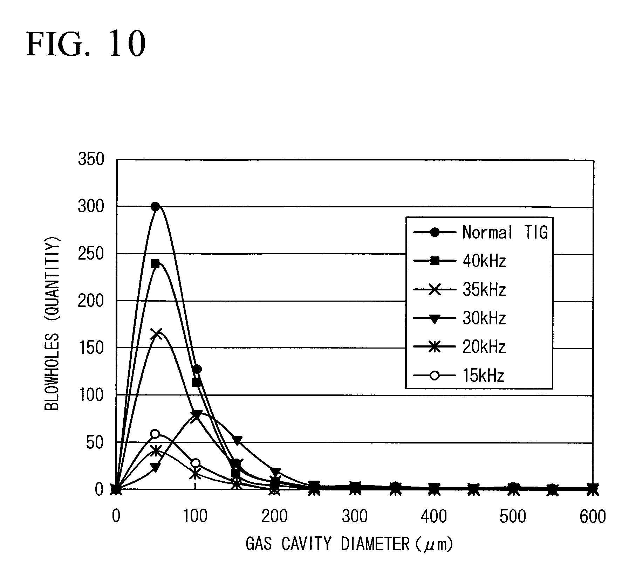

Next, in order to obtain the ultrasonic wave frequency suitable for the TIG welding, the experiment was performed using the apparatus shown in FIG. 3. The frequencies of 15 kHz, 20 kHz, 30 kHz, 35 kHz, and 40 kHz were used. The friction-stir-welding was conducted without flowing shielding gas. In addition, the normal TIG welding using the frequency of 60 Hz was conducted for comparison. The results were shown in FIG 10.

The followings were found from FIG. 10. The ultrasonic wave TIG welding was able to reduce the blowholes more than the normal TIG welding. In addition, the quantity of the blowholes decreased when the frequency decreased, became the smallest at the frequency of 20 kHz, and increased slightly when the frequency further decreased (15 kHz).
It was found that the frequency of 20 kHz or lower was preferred to reduce the blowholes at the joint C. Because the effects of the frequency become small when the frequency exceeds 30 kHz, the frequency within the range of 1 to 30 kHz is preferred in terms of the effects. The noise becomes loud at a frequency of 15 kHz or lower. Therefore the frequency within the range from 15 kHz to 25 kHz is preferred in consideration of the working environment.
In the aforementioned experiments, the friction-stir-welding was conducted in the downward configuration, and then the melt-welding was conducted in the sideways configuration. However, the welding configuration is not limited thereto.

The experiments was performed using A5083 that is an aluminium alloy, examples of the usable base material include a non-heat-treated aluminium alloy including 1000 series; a heat-treated aluminium alloy that is a material to be hardly joined, including 2000 series, 6000 series, and 7000 series; a wrought aluminium alloy including ADC12; a magnesium alloy including AZ31 and AZ61; titanium and an alloy thereof; copper and an alloy thereof; nickel and an alloy thereof; a steel material such as stainless steel; and lead. Also, argon was used as the shielding gas during the friction-stir-welding, but usable examples thereof include another inert gas or the mixed gas obtained by mixing another gas with an inert gas such as argon. In addition, the present invention can be used in spot friction-stir-welding which is included in the friction-stir-welding of the present invention.

In order to flow the shielding gas during the friction-stir-welding of the present invention, the method was used in the experiments, in which the shielding gas was flowed through a space between the tool and the protection cover. Other than this method, the following method can be used as long as the joint C is shielded from atmosphere: the method of flowing the shielding gas from the gas-feeding hole formed on the side surface of the tool; and the method of flowing the shielding gas from the surrounding area using the gas-feeding nozzle. Also, it is preferable that the shielding gas be continuously flowed during the joining step. However, when the position of the joint is previously known at which another member to be joined is joined by melt-welding in the subsequent step, the shielding gas may be flowed only at this position for the reduction in the shielding gas. In order to effectively use the shielding gas, the after shield jig can be provided, which cover the joint C opposite to the moving direction of the probe, to thereby maintain the shielding gas-rich state.

### INDUSTRIAL APPLICABILITY

According to the present invention, the generation of the blowholes at the joint C can be prevented when melt-welding or resistance-welding is conducted at the joint C formed by friction-stir-welding. Therefore, the present invention is industrially useful.

## Claims

1. A joining method comprising:
conducting friction-stir-welding of members to be joined while flowing an inert shielding gas, to form a joint; and then
conducting melt-welding or resistance-welding of the joint.

2. A joining method comprising:
conducting friction-stir-welding of members to be joined, to form a joint; and then
conducting melt-welding or resistance-welding of the joint while applying an ultrasonic wave.

3. A joining method comprising:
conducting friction-stir-welding of members to be joined while flowing an inert shielding gas, to form a joint; and then
conducting melt-welding or resistance-welding of the joint while applying an ultrasonic wave.

4. A joining method according to claim 2 or 3, wherein the frequency of the ultrasonic wave is within a range from 1 to 30 kHz.

5. A joining method according to any one of claims 1 through 3, wherein the melt-welding or the resistance-welding is conducted to join another member to be joined to the joint.

6. A joining method according to any one of claims 1 through 3, wherein the member to be joined is at least one selected from the group consisting of aluminum, an aluminum alloy, magnesium, a magnesium alloy, nickel, a nickel alloy, titanium, a titanium alloy, copper, a copper alloy, lead, and a steel material.
